# EUROPEAN PATENT APPLICATION

(11) **EP 2 905 271 A1**
(43) Date of publication of application: **12.08.2015**
(21) Application number: 14154608.5
(22) Date of filing: 11.02.2014
(51) Int. Cl.: C04B 35/117, C04B 35/488, C04B 35/52, C04B 35/565, C04B 35/628, C04B 35/80

(54) **Ceramic matrix composite for high temperature application containing ceramic fibers coated with a MAX phase**

(71) Applicant: ALSTOM Technology Ltd, 5400 Baden (CH)
(72) Inventor: Stuer, Michael, 5443 Niederrohrdorf (CH); Bossmann, Hans-Peter, 79787 Lauchringen (DE); Witz, Gregoire Etienne, 5413 Birmenstorf (CH)
(74) Representative: Alstom Technology Ltd

(57) **Abstract**

The invention refers to a ceramic matrix composite CMC (10) comprising ceramic fibres (1), embedded in a ceramic matrix (3). It is characterized in that the fibres (1) comprise a coating (2) made of a MAX phase. The MAX phase coating (2) could be arranged direct on the surface of the fibre (1) or for example between additional coating layers (4) and (5). The properties of the CMC are improved, preferable the high-temperature capabilities.

## Description

### BACKGROUND OF THE INVENTION

The present invention relates to the technology of ultra-high temperature resistant components, especially hot gas path components for gas turbines. It refers to a ceramic matrix composite (CMC) which can be used at temperatures of about 1600 °C or even higher for a long term (>25 000 operation hours) without the disadvantage of an interface degradation.

### PRIOR ART

Ceramic matrix composites consist of ceramic fibres and/or whiskers etc. embedded in a ceramic matrix. The ceramic matrix is reinforced by the fibres/whiskers. The reinforcement can come in many forms, for example continuous fibres, short fibres, whiskers, particles or a combination. In the present disclosure the term fibre is used for all those forms.

The known CMCs have - compared to the conventional technical ceramics, like silicon carbides, silicon nitride, alumina or zirconia - for example increased crack resistance, elongation and thermal shock resistance properties. Because of the low density they are especially attractive in a vast array of application in jet engines, but also in stationary gas turbines, for example in exhaust systems or other hot-zone structures, where CMCs are envisioned as lightweight replacements for metallic superalloys.

The exceptional properties observed for CMCs are due to the fibre pull-out as it has been used already for a long time in polymeric composites. Indeed for CMCs to show better properties than the bulk ceramic materials the interface between the ceramic fibre and the ceramic matrix has to be weaker than the strength of the fibre. During crack initiation and propagation the fibre pull-out absorbs energy from the crack tip and thereby limits its propagation.

However, it was observed, that the interface reactions occurring at high temperatures lead to hard interfaces and thereby limit the described pull-out effect and promote the fibre rupture. The degradation of the fibre/matrix interface can be due to diffusion mechanisms, hardening and sintering processes. Once the interface becomes too strong to allow fibre pull-out or the fibre strength becomes too low to allow fibre pull-out before rupture, the strengthening mechanism of CMCs versus conventional monolithic ceramics is lost.

The interface degradation between the ceramic fibre and the ceramic matrix is the main limitation for ceramic matrix composite usage at high temperatures.

Therefore, for a successful implementation of CMCs for high temperature (>1400°C) and ultra-high temperature (>1600°C) applications it is necessary to overcome on one hand the degradation of the CMC itself from the surface exposed to the combustion environment and on the other hand - and this is most important - the degradation of the internal fibre/matrix interface.

One option is to try to protect CMC structures with a thermal protection system. A lot of such solutions were published in the past. However, in case of thermal protection failure, high temperature capability of the CMC structure would still be required, especially in combination of future expected reductions in cooling air.

In the prior art so-called MAX phases are known, an overview of such phases is described in the document: M. Radovic and M. Barsoum: MAX phases: Bridging the gap between metals and ceramics. American Ceramic Society Bulletin, Vol. 92, No. 3, April 2013, pages 20-27.

During the last 15 years the research of the MAX phases exploded. MAX phases are a family of ternary carbides and nitrides with a layered hexagonal crystal structure. They are so called because of their general chemical formula Mₙ₊₁ AXₙ, where
n = 1, 2 or3,
M = early transition metal (Sc, Ti, V, Cr, Zr, Nb, Mo, Hf, Ta),
A = A-group element, mostly IIIA and IVA (Al, Si, P, S, Ga, Ge, As, Cd, In, Sn, Ti, Pb) and
X = C and/or N.

So far, the most promising MAX phase for high-temperature applications is Ti₂AlC because of the relative low raw material costs, the low density and excellent oxidation resistance and crack-healing capabilities. Ti₂AlC was therefore used as material for heating elements heated to 1450 °C in air. Micrographs of the Al₂O₃ oxide layer after 10,000 thermal cycles up to 1350 °C showed no spallation or cracking of the oxide layer. Known are also tests of MAX phases for gas burner nozzles. Existing solutions are mainly limited to applications below 1400 °C. Although some materials have been reported to be used at much higher temperatures those materials are not suitable for long-term applications, such as required for stationary gas turbine applications with operating hours of more than 25 000.

Therefore, the development of CMCs with ultra-high temperature capabilities that do not require additional thermal protection systems is still a requirement in the gas turbine technology.

### SUMMARY OF THE INVENTION

It is an object of the present invention to disclose a ceramic matrix composite with improved properties at high temperatures (up to 1600 °C and even higher) which does not show a degradation of the fibre/matrix interface and which is suitable for a long term application such as required in stationary gas turbines.

This and other objects are obtained by a ceramic matrix composite according to claim 1.

The core of the present invention is the application of a MAX phase as a coating for the ceramic fibres rep. whiskers before inserting said coated fibre/whisker in the ceramic matrix.

It is an advantage of the disclosed CMC that the inherent benefit of MAX phase usage for fibre coating application comes from its ductility at elevated temperatures combined with a high resistance to chemical attacks and extreme temperatures.

In a preferred embodiment the MAX phase coating thickness is in the range of 50nm to 50µm, depending on the detailed requirements.

It is a further advantage, if there are arranged additional coating layers on the fibre/MAX phase interphase and/or the MAX phase/matrix interfaces. Such an additional coating can be arranged direct on the surface of the fibre, and the MAX phase coating is arranged on the surface of said additional coating, that means on the fibre/MAX phase interface, and/or a further coating can be arranged direct on the surface of the MAX phase coating that means on the MAX phase/matrix interface. Such additional coating layers can be for example diffusion barriers, oxidation barriers and/or self-healing feedstock material and protect therefore the MAX phases.

In a preferred embodiment the invention is used in combination with oxide-oxide based CMCs. Compared to, for example SiC-SiC CMCs, they have the benefit of being corrosion resistant in gas turbine atmospheres.

The disclosed CMCs are used with advantage as hot gas path components or as parts of such components in gas turbines.

### BRIEF DESCRIPTION OF THE DRAWINGS

The present invention is now to be explained more closely by means of different embodiments and with reference to the attached drawings.
- Fig. 1: shows in a schematic perspective drawing a CMC according to a first embodiment of the present invention;
- Fig. 2: shows in a schematic perspective drawing a CMC according to a second embodiment of the present invention;
- Fig. 3: shows in a schematic perspective drawing a CMC according to a third embodiment of the present invention and
- Fig. 4: shows in a schematic perspective drawing a CMC according to a forth embodiment of the present invention.

The same reference numbers are used for the same details in the figures.

### DETAILED DESCRIPTION OF DIFFERENT EMBODIMENTS OF THE INVENTION

As described above the general idea of the described ceramic matrix composite according to the present application is the application of a MAX phase as a coating for the ceramic fibres (resp. whiskers) before inserting said coated fibre/whisker in the ceramic matrix.

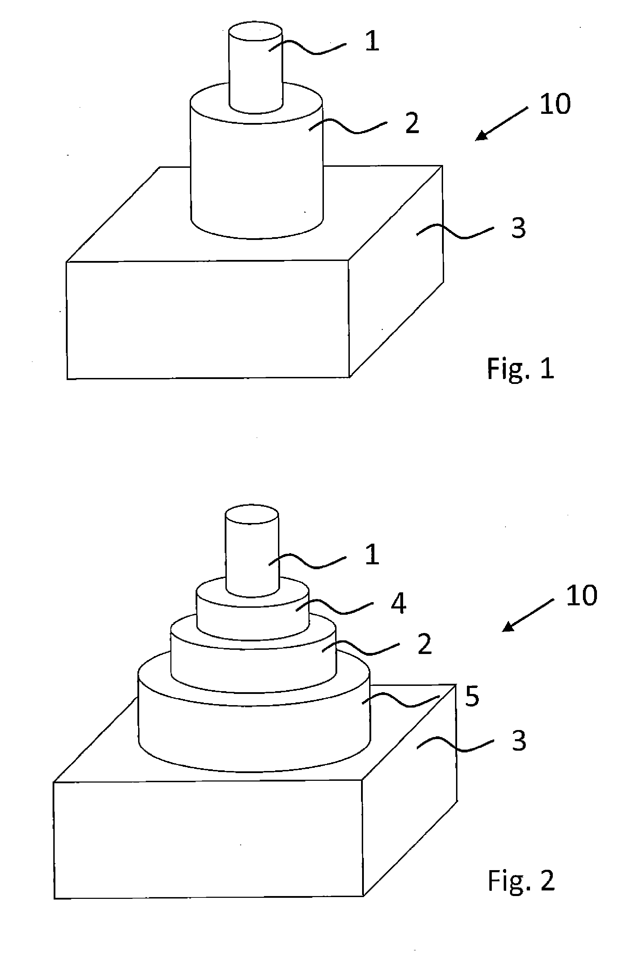

Figures 1 to 4 show different embodiments of the present invention.

Fig. 1 shows in a schematic perspective drawing a part of a gas turbine hot gas path component made of a ceramic matrix composite 10 according to a first embodiment of the present invention. An oxide or non-oxide ceramic fibre 1, such as mullite, Al₂O₃, SiC, SiAlON, Hf₂O₃, ZrO₂, YSZ, Y₂O₃, eutectic ceramic, C (carbon is also considered a ceramic material) etc., which can be a continuous or a short fibre 1, is coated with a MAX phase 2. In general, the coated fibre 1, 2 can also be a coated whisker or coated particles or combinations of them. The coating thickness can reach from about 50 nm to 50 µm. The coated fibre 1, 2 is embedded in an oxide or non-oxide ceramic matrix 3, such as Al₂O₃, SiC, C, ZrO₂ etc. The benefit of the MAX phase coating 2 comes from its ductility at elevated temperatures combined with a high resistance to chemical attacks and extreme temperatures. Furthermore the MAX phases could also comprise a self-healing/protective oxidation capability. Therefore, the above described disadvantage (degradation in the fibre/matrix interface by using the CMC at high temperatures) could be prevented.

Fig. 2 shows in a schematic perspective drawing a part of a gas turbine hot gas path component made of a ceramic matrix composite 10 according to a second embodiment of the present invention. In addition to the embodiment shown in Fig. 1 there is applied an additional coating 4 on the surface of the fibre 1 (= on the fibre/MAX phase interface) and an additional coating 5 on the surface of the MAX phase 2 (= on the MAX phase/matrix interface. The multilayer coated fibre 1, 4, 2, 5 is embedded in the ceramic matrix 3. The additional coating layers 4, 5 bring additional functionality such as diffusion barrier to prevent transformation of MAX phases into different non-ductile ceramics, oxidation barrier, self-healing feedstock material etc. The ductility of the MAX phase is supposed to even present a "debonding-like" behaviour leading to an apparent pull-out effect even if the interface becomes too strong due to its high ductility over other ceramics.

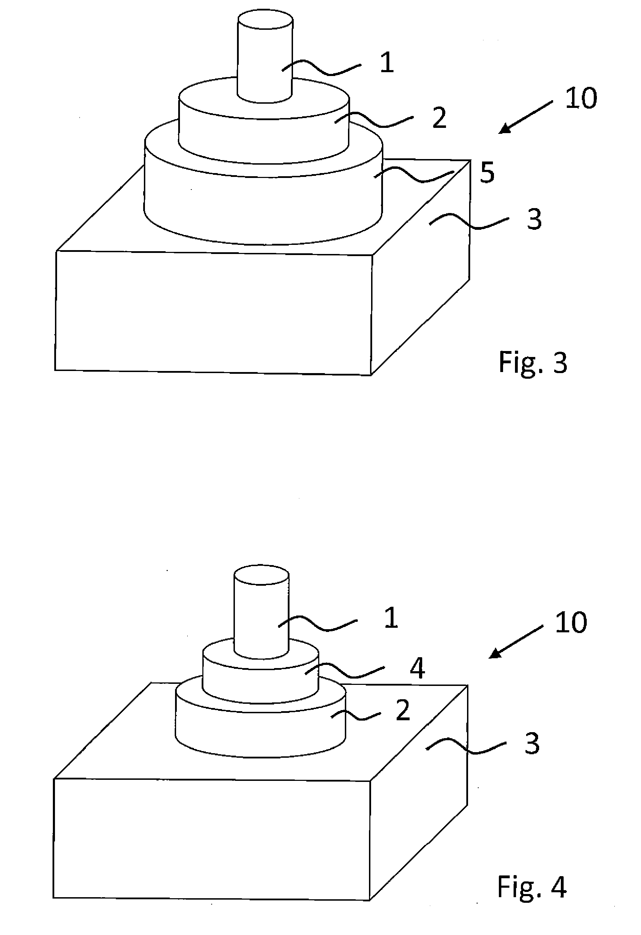

Fig. 3 shows in a schematic perspective drawing a part of a gas turbine hot gas path component made of a ceramic matrix composite 10 according to a third embodiment of the present invention. In addition to the embodiment shown in Fig. 1 there is applied an additional coating 5 on the surface of the MAX phase 2 (= on the MAX phase/matrix interface. The multilayer coated fibre 1, 2, 5 is embedded in the ceramic matrix 3. The additional coating layer 5 brings additional functionality as described above.

Eventually, Fig. 4 shows in a schematic perspective drawing a part of a gas turbine hot gas path component made of a ceramic matrix composite 10 according to a fourth embodiment of the present invention. In addition to the embodiment shown in Fig. 1 there is applied an additional coating 4 on the surface of the fibre 1 (= on the fibre/MAX phase interface). The multilayer coated fibre 1, 4, 2 is embedded in the ceramic matrix 3. The additional coating layer 4 brings additional functionality as described above.

In a preferred embodiment the invention is used in combination with oxide-oxide based CMCs. Compared to, for example SiC-SiC CMCs, they have the benefit of being corrosion resistant in gas turbine atmospheres.

The development of CMCs with high temperature capabilities according to the present invention that do not require thermal protection systems will additionally simplify the manufacturing by decreasing the manufacturing steps and improve the overall robustness of the turbine system (less part = less parts to fail).

In one embodiment, a 100-1000 nm Ti₂AlC coating is manufactured by PVD (Physical Vapour Deposition) on Al₂O₃ (Nextel 610) fibres. The fibres are then impregnated with an Al₂O₃ slurry and fired at a temperature of between 1300°C and 1600°C to sinter the matrix phase.

In another embodiment, the Al₂O₃ fibres are first coated with slurry containing Al₂TiO₅ nanoparticles forming a 100-1000 nm thick coating, cured at a temperature of between 1300 °C and 1600 °C prior to be coated in the same process as described in the first embodiment

In a further embodiment, the Al₂TiO₅ slurry coating is manufactured after coating with the MAX phase and prior to the Al₂O₃ coating slurry impregnation for forming the matrix, the firing of the Al₂TiO₅ slurry coating can be performed either prior to the matrix impregnation, another solution is to perform the firing of the Al₂TiO₅ slurry coating and the matrix together in the same process.

In additional embodiment SiC fibres are coated with a 50-1000 nm Ti₃SiC₂ MAX phase manufactured by PVD. The coated fibres are then infiltrated with SiC by CVI (Chemical Vapour Infiltration) to form a SiC/SiC ceramic matrix composite.

In another embodiment a zirconia fibre is coated with a 1-5 µm thick Hf₂TiC manufactured by a slurry coating, the coated fibres are then impregnated with an Al₂O₃ slurry which will form the matrix after frig at high temperature

In another embodiment a zirconia fibre is coated with a 1-5 µm thick Zr₂TiN manufactured by a slurry coating, the coated fibres are then impregnated with an yttria stabilized zirconia slurry which will form the matrix after frig at high temperature.

### LIST OF REFERENCE NUMERALS

- 1: ceramic fibre
- 2: coating/layer of MAX phase
- 3: ceramic matrix
- 4: additional layer between positions 1 and 2
- 5: additional layer between positions 2 and 3
- 10: ceramic matrix composite

## Claims

1. Ceramic matrix composite (10) comprising ceramic fibres (1), embedded in a ceramic matrix (3), **characterized in that** the fibres (1) comprise a coating (2) made of a MAX phase.

2. Ceramic matrix composite (10) according to claim 1, **characterized in that** the MAX phase coating (2) is arranged direct on the surface of the fibre (1).

3. Ceramic matrix composite (10) according to claim 1, **characterized in that** the MAX phase coating (2) has a thickness, which is in the range of 50nm to 50µm.

4. Ceramic matrix composite (10) according to claim 1, **characterized in that** an additional coating (4) is arranged direct on the surface of the fibre (1) and the MAX phase coating (2) is arranged on the surface of said additional coating (4), that means on the fibre/MAX phase interface, and/or a further coating (5) is arranged direct on the surface of the MAX phase coating (2), that means on the MAX phase/matrix interface.

5. Ceramic matrix composite (10) according to one of claims 1 to 4, **characterized in that** it is a combination of oxide-oxide based CMCs.

6. Ceramic matrix composite (10) according to one of claims 1 to 5, **characterized in that** it is used for hot gas path components for gas turbines.
